(19) Europäisches Patentamt
European Patent Office
Office européen des brevets

(11) **EP 2 429 237 A1**

(12) **EUROPEAN PATENT APPLICATION**

(43) Date of publication:
**14.03.2012 Bulletin 2012/11**

(51) Int Cl.:
*H04W 28/22* (2009.01)    *H04W 72/08* (2009.01)

(21) Application number: **10176080.9**

(22) Date of filing: **09.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **NTT DoCoMo, Inc.**
**Tokyo (JP)**

(72) Inventors:
• **Jurca, Dan**
**81373, Munich (DE)**

• **Thakolsri, Srisakul**
**80689, Munich (DE)**
• **Kellerer, Dr. Wolfgang**
**82256, Fuerstenfeldbruck (DE)**

(74) Representative: **Betten & Resch**
**Patentanwälte**
**Theatinerstrasse 8**
**80333 München (DE)**

(54) **Method and Apparatus for allocating Network Rates**

(57)    A method for allocating network rates to a plurality of mobile terminals through which users access different applications through a network having a certain limited total bandwidth to allocate, said method comprising:

using as an input to an optimizing operation a quality utility function which indicates for a certain application the quality perceived by a user depending on the allocated data rate, wherein

said optimizing operation calculates a combined quality measure based on the quality utility functions for the different applications and for different possible resource allocations in such a way that said quality measure is optimized, to thereby obtain an overall optimized resource allocation for the network, wherein said method comprises:

providing a tuning mechanism which enables an operator of said network to define said quality measure to be optimized such that there is achieved a compromise between a maximum network efficiency and maximum fairness, wherein

maximum efficiency means that network resources are preferably allocated to those applications which benefit most in terms of quality from the resource allocation, and wherein maximum fairness means to bring the quality levels experienced by the different users to similar values which corresponds to minimizing a quality difference perceived between the users of the different applications.

**Fig. 1**

**Description**

**FIELD OF INVENTION**

The present invention relates to a method and an apparatus for allocating network rates.

**BACKGROUND OF THE INVENTION**

As wireless networks offer higher bandwidth, convenience, mobility and low-cost infrastructure, video streaming over wireless networks becomes more and more popular and an important application. Unlike other traditional services such as voice, short messaging or web browsing, providing a video service makes the network resource management more complicated due to different requirements in terms of a required network resource, or the impact of packet loss and packet delay to the video quality. Moreover, different video contents also have different requirements, such as data rate and packet loss rate, and different impacts to the human perceived quality. For instance, the sensitivity of human eyes to the video content can be different depending on the degree of motion, see e.g. Z. Wang, L. Lu, and A. C. Bovik, "Video Quality Assessment Based on Structural Distortion Measurement," IEEE Signal Processing: Image Communication, vol. 19, no. 1, pp. 121-132, Feb. 2004.

As a wireless network operator, the ultimate goal is to keep a customer's relationship as long as possible regardless of application types or services. For instance, a network operator may keep offering a new service to the customer with a good service quality. Nevertheless, with the video streaming service, the network resources are foreseen to be shortened due to a high demand of data rate. Hence, optimizing the network resource allocation to multiple clients accessing different applications at the same time, over the same wireless medium becomes a priority for the network operator. Allocating the network resource should take into account an impact to the user perceived quality (or Quality of Experience (QoE)) for each individual application, and the channel conditions for each active client. One of the first existing works that optimize the network resource allocation based on the QoE or utility information is described in S. Khan, S. Duhovnikov, E. Steinbach, and W. Kellerer, "MOS-based multiuser multiapplication cross-layer optimization for mobile multimedia communication," Advances in Multimedia, 2007, article ID 94918. Therein, the optimization is performed according to the optimization criteria, which maximizes the overall quality perceived by the end user (Max-SumMOS, where MOS (Mean Opinion Score) is a known quality measure to measure user perceived quality). This results to the optimal resource allocation giving the highest system efficiency. Alternatively, the operator may set an optimization criteria such that all users would perceive a similar quality (e.g. MaxMinMOS). For the latter approach, reference is made e.g. to L.-U. Choi, M. T. Ivrlac, E. Steinbach, and J. A. Nossek, "Bottom-up approach to cross-layer design for video transmission over wireless channels," in Proc. IEEE Vehicular Technology Conference 2005-Spring (VTC'S05), vol. 5, Stockholm, Sweden, May 30 - Jun. 1, 2005, pp. 3019-3025, or to B. Radunovic and J.-Y. Le Boudec, "A unified framework for maxmin and min-max fairness with applications, " IEEE/ACM Trans. on Networking, vol. 15, no. 5, pp. 1073-1083, Oct. 2007.

The latter optimization criterion emphasizes more the fairness of the system. It should be noted that both optimization criteria are considered under the same network resource constraint.

In order to optimize the resource allocation across different applications, one needs to unify first the utility metrics of each considered application under a general metric, which encompasses the perceived user satisfaction under certain receiving conditions for the accessed application. For instance, in S. Khan et al., it uses the Mean Opinion Score (MOS) (see ITU-T Recommendation P.800, "Method for subjective determination of transmission quality," August 1996) to quantify the user satisfaction of the application or service according to the received data rate and a packet loss rate. The application utility function either is pre-installed in a network node performing an optimization or it can be sent to a network node performing an optimization together with the application data stream to enable a network resource allocation optimization in the network. After having known the application utility function in the network, finding an optimal resource allocation can then be done by solving the optimization problem based on the optimization criteria previously set by the network operator.

In perfect systems, in which all users have good channel conditions, all applications can be served with very high quality. But, in constrained systems, the resource allocation must be carefully performed based on an optimization procedure. The optimization mechanisms used so far offer only extreme approaches in which either the total sum of the quality (the "utility") is maximized (MaxSumMos) or an approach in which the target is to maximize fairness and where there is ensured a minimum quality for each user (MaxMinMos). It would, however, be desirable to have a more flexible approach which considers also the trade-off between the utility of the allocated resources, and the fairness balance among all users.

The prior art so far did not address such a problem.

Known from the prior art are cross-layer optimization approaches, in which the system optimization decisions are taken at a central point, based on aggregated information from different layers in the network architecture. The fundament of cross layer design and optimization mainly based on information from the application, network, MAC and physical layer is e.g. presented in S. Khan, S. Duhovnikov, E. Steinbach, and W. Kellerer, "MOS-based multiuser multiapplication cross-layer optimization for mobile multimedia communication," Advances in Multimedia, 2007, article ID 94918, in L..-U. Choi, M. T. Ivrlac, E. Steinbach, and J. A. Nossek, "Bottom-up approach to cross-layer design for video transmission over wireless channels," in Proc. IEEE Vehicular Technology Conference 2005-Spring (VTC'S05), vol. 5, Stockholm, Sweden, May 30 - Jun. 1, 2005, pp. 3019-3025, in US Patent 7609652, or in European Patent EP 1798897 B1. The presented optimizer manages the optimal network resource allocation as perceived by the application consumers.

Application utility functions are discussed e.g. in S. Khan et al, in US Patent 7609652, or in European Patent EP 1798897 B1. The main purpose of these works is to achieve a model for the application, which generalizes the application behavior as a function of the network resources allocated to it. The quality of the application, as perceived by the end user, located on the other side of the network, is mostly modeled as a function of the allocated transmission rate, loss process encountered during transmission, and end-to-end network delay and packet jitter. Theoretical models are usually validated by small scale experiments and simulations, and sometimes subjective user tests. The generally accepted conclusion is that the application quality dependence of the network resources allocated can be represented as a logarithmic-like function. Hence, the greatest improvements to application quality come at a small network resource price at low operation points, while later, quality improvements can be achieved at the price of increasing demand in resources.

Finally, there have been proposed different metrics for network resource allocation optimization and scheduling. Max-min fairness metrics used in the optimization process insure similar quality levels to all active users, independent of their channel conditions. While such a metric strives for complete fairness, it is blind to the given instantaneous network set-up, and hence can lead to very inefficient network resource utilization. To take such cases into account, proportional fairness metrics have been derived. These metrics take into account the behavior of the considered application as a function of allocated network resources (as presented above), and manage the resource allocation process, considering the individual channel characteristics seen at each user. While these metrics are efficient in terms of network resource utilization, and in terms of utility of those resources to the quality perceived by each user, they do not take into account any relative fairness goal among the active users. These metrics and their implications are e.g. discussed in B. Radunovic and J.-Y. Le Boudec, "A unified framework for maxmin and min-max fairness with applications, " IEEE/ACM Trans. on Networking, vol. 15, no. 5, pp. 1073-1083, Oct. 2007, in US Patent 20070248178, US Patent 20080273458, US Patent 5675576, and European Patent EP1798897B1.

Additionally, works on guaranteed QoE metrics (see e.g. S. Thakolsri, S. Khan, E. Steinbach, and W. Kellerer, "QoE-Driven Cross-Layer Optimization for High Speed Downlink Packet Access," Journal of Communications, Special Issue on Multimedia Communications, Networking and Applications, vol. 4, no 9, pp. 669-680, Oct. 2009) enforce a minimum level of quality for the active users. While similar to fairness metrics when enough network resources are available, this approach will call the admission control module in case of network congestion, hence increasing the unfairness of the system.

However, as mentioned, neither the problem of a more flexible optimization between the extreme goals of maximum efficiency and maximum fairness nor its solution is suggested by the prior art.

## SUMMARY OF THE INVENTION

According to one embodiment there is provided a method for allocating network rates to a plurality of mobile terminals through which users access different applications through a network having a certain limited total bandwidth to allocate, said method comprising:

using as an input to an optimizing operation a quality utility function which indicates for a certain application the quality perceived by a user depending on the allocated data rate, preferably further also depending on the channel condition, wherein

said optimizing operation calculates a combined quality measure based on the quality utility functions for the different applications and for different possible resource allocations in such a way that said quality measure is optimized, to thereby obtain an overall optimized resource allocation for the network, wherein said method comprises:

providing a tuning mechanism which enables an operator of said network to define said quality measure to be optimized such that there is achieved a compromise between a maximum network efficiency and maximum fairness, wherein

maximum efficiency means that network resources are preferably allocated to those applications which benefit most in terms of quality from the resource allocation, and wherein maximum fairness means to bring the quality levels experienced by the different users to similar values which corresponds to minimizing a quality difference perceived between the users of the different applications.

In view of the shortcomings and the lack of flexibility of the prior art approaches, when the gap in performance between the two contradicting decisions (maximum utility or maximum fairness) becomes too large for the efficiency of the operator, intermediary operations points would be preferred. For example, with the MaxSumMOS optimization criteria, the optimizer may not give any network resources to the user having a very bad channel condition or the user accessing an application that requires a lot of network resources. This sounds too unfair from the user's view, but on the other hand it gives the maximum system efficiency. In contrary, by applying the MaxMinMOS optimization criteria, all users would experience the same quality. This sounds fair from the user's view; however, it could lead to very low system efficiency. Specifically, one single user, who cannot achieve a good perceived quality, e.g. due to a poor channel condition and a demanding application, forces all other users to share this poor experience. Therefore, the provision of a tuning mechanism which allows a network operator to change its operation point in the resource allocation problem between the extreme points of maximum system efficiency and fair resource allocation among all users is very helpful to the network operator.

According to one embodiment said tuning mechanism comprises:

setting a fairness constraint which corresponds to a maximum allowed quality difference parameter representing the quality difference between different applications and which is to be fulfilled when performing a resource allocation.

By providing a parameter for the fairness constraint, it becomes possible to set the operation point in between the two extremes of maximum fairness and maximum efficiency while ensuring a minimum fairness.

According to one embodiment said tuning comprises:

setting an efficiency target parameter which corresponds to a minimum value of the overall quality measure of the actual chosen resource allocation and which is to be fulfilled when performing a resource allocation.

By providing a parameter for the efficiency constraint, it becomes possible to set the operation point in between the two extremes of maximum fairness and maximum efficiency while ensuring a minimum efficiency.

According to one embodiment maximizing wherein the actual resource allocation is chosen such that the overall quality measure is optimized while meeting said fairness constraint, and/or the actual resource allocation is chosen such that the fairness is maximized while meeting said efficiency target parameter.

In this manner the operating point (the allocation) can be chosen such that even if a minimum quality is ensured there is achieved a maximum efficiency, and even if a minimum efficiency is ensured, a maximum fairness can be achieved at the same time. In other words, the resource allocation is performed such that the given constraint is fulfilled while the other (flexible) parameter (efficiency or fairness) is simultaneously optimized.

According to one embodiment, if a resource allocation cannot be found which at the same time meets said fairness constraint parameter and said efficiency target parameter, searching for a resource allocation which comes closest to matching these two parameters.

This enables to find a resource allocation for cases where efficiency and fairness constraints cannot be met simultaneously.

According to one embodiment the method further comprises:

if a resource allocation cannot be found which at the same time meets said fairness constraint parameter and said efficiency target parameter, defining a weight for each of said fairness constraint parameter and said efficiency target parameter, said weights being used when searching for a resource allocation which comes closest to matching these two parameters.

This is another embodiment which enables the setting of two constraints simultaneously.

According to one embodiment, if a resource allocation cannot be found which at the same time meets said fairness constraint parameter and said efficiency target parameter, defining an efficiency relaxation parameter which indicates the extent to which the efficiency constraint set by the efficiency parameter may be relaxed when looking for a resource allocation, and defining a fairness relaxation parameter which indicates the extent to which the fairness constraint set by the fairness parameter may be relaxed when looking for a resource allocation; and searching for a resource allocation which meets a relaxed fairness constraint and a relaxed efficiency constraint as defined by said relaxation parameters in connection with said fairness and said efficiency parameters.

The introduction of a fairness relaxation parameter and an efficiency relaxation parameter enable an implementation with two constraints even in circumstances that the two constraints are set such that - without the relaxation conditions - could not be fulfilled simultaneously. The relaxation parameters enable the search for a resource allocation which meets both constraints within the set relaxation range.

According to one embodiment there is provided an apparatus for allocating network rates to a plurality of mobile terminals through which users access different applications through a network having a certain limited total bandwidth to allocate, said apparatus comprising:

A module for using as an input to an optimizing operation a quality utility function which indicates for a certain application the quality perceived by a user depending on the allocated data rate, preferably further also depending on the channel condition, wherein

said module is adapted to perform said optimizing operation to calculate a combined quality measure based on the quality utility functions for the different applications and for different possible resource allocations in such a way that said quality measure is optimized, to thereby obtain an overall optimized resource allocation for the network, wherein said apparatus comprises:

a module for providing a tuning mechanism which enables an operator of said network to define said quality measure to be optimized such that there is achieved a compromise between a maximum network efficiency and maximum fairness, wherein

maximum efficiency means that network resources are preferably allocated to those applications which benefit most in terms of quality from the resource allocation, and wherein maximum fairness means to bring the quality levels experienced by the different users to similar values which corresponds to minimizing a quality difference perceived between the users of the different applications.

In this manner an apparatus can be implemented which operates according to the principles of the invention.

According to one embodiment the apparatus further comprises means of modules to carry out a method according to one of the embodiments of the invention.

According to one embodiment there is provided a computer program comprising computer program code which when being executed on a computer enables said computer to carry out a method according to one of one of the embodiments of the invention.

## DESCRIPTION OF THE DRAWINGS

Fig. 1 schematically illustrates the scenarios in which the embodiments of the invention may be applied.
Fig. 2 schematically illustrates an embodiment with specific resource allocations.
Fig. 3 schematically illustrates a configuration within which an embodiment of the invention may be applied.
Fig. 4 schematically illustrates the two extreme operating points an operating points in between where the embodiments of the invention may be applied.
Fig. 5 illustrates an algorithm to perform a fairness optimization.
Fig. 6 illustrates an algorithm to perform an efficiency optimization.
Fig. 7 illustrates another algorithm to perform an efficiency optimization.

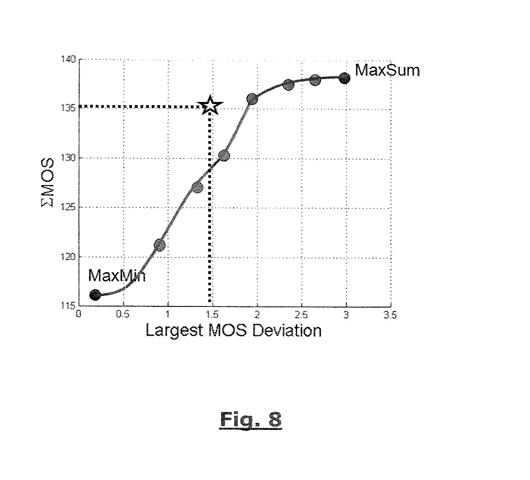

Fig. 8 illustrates an embodiment where two constraints are to be fulfilled.
Fig. 9 illustrates an algorithm to perform an optimization with two constraints simultaneously.

## DETAILED DESCRIPTION

The present invention will now be described by exemplary embodiments. However, first of all some terms used in the description will be explained.

QoE - Quality of experience
PSNR - Peak Signal-to-Noise Ratio
MOS - Mean Opinion Score
SSIM - Structural Similarity Index
MSE - Mean Square Error

CLO - Cross Layer Optimizer
AS -Application Server
BS - Base station
UE - User Equipment

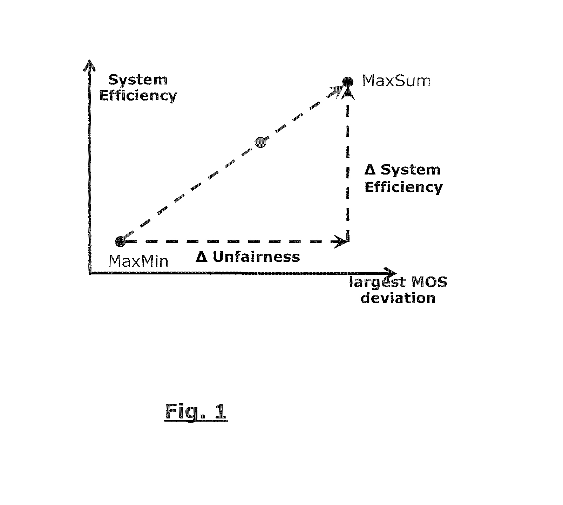

Figure 1 depicts the schema of the trade-off between the system efficiency and fairness for the network resource allocation optimization problem, which illustrates the basic approach according to one embodiment of the present invention, namely to enable a tuning which allows the setting of an operation point between the two extremes of maximum efficiency and maximum fairness.

According to one embodiment there is proposed a cross layer optimization approach to distribute the available network resources to multiple users accessing different applications. The resource allocation is based on the utility functions of the accessed applications, and there is used the maxmin and proportional fairness metrics to derive extreme operation points for the network. Within these two operation points the mechanism allows the network operator to fine-tune its performance (resource allocation), as a trade-off between the efficient use of system resources and the fairness among active clients.

According to one embodiment there is therefore provided a tunable algorithm for the efficient allocation of wireless resources in wireless cellular unicast scenarios, when multiple users concurrently access multiple applications. There is assumed a system in which a number of active users are present in the same wireless cell and access different types of applications. The applications are characterized by their quality levels as a function of the amount of network resources allocated to them. This dependency of application quality to allocated resources is modeled as the utility function of the given application. Specifically, the quality levels can be expressed as user received MOS (Mean Opinion Score) levels, PSNR, MSE, etc... The users are heterogeneously located in the surface of the wireless cell; hence they experience different channel quality levels. The wireless Base Station serving the cell has a total amount of channel resources that it can allocate to the users' accessed applications, hence enacting on a given resource allocation solution.

Depending on the performance metrics adopted at the BS for the resource allocation among users/applications, the network operator can now according to one embodiment favor a solution which emphasizes the efficient utilization for these resources, or alternatively, a solution which favors the fairness among users. By efficient resource utilization there is meant the allocation of resources to the applications which mostly benefit from this action, in terms of increased quality levels, given the user application utility functions and user channel quality. By fairness among users there is meant a target for the resource allocation solution which brings the application quality levels experienced by all users to similar values, regardless of the users channel conditions or application utility functions.

The two solutions represent two extreme operation points for the network operator. The first one emphasizes the efficiency of the wireless resource utilization with no consideration for the quality differences perceived by the users, while the second solution maintains user fairness, disregarding the disproportionate need of wireless resources required to achieve this goal.

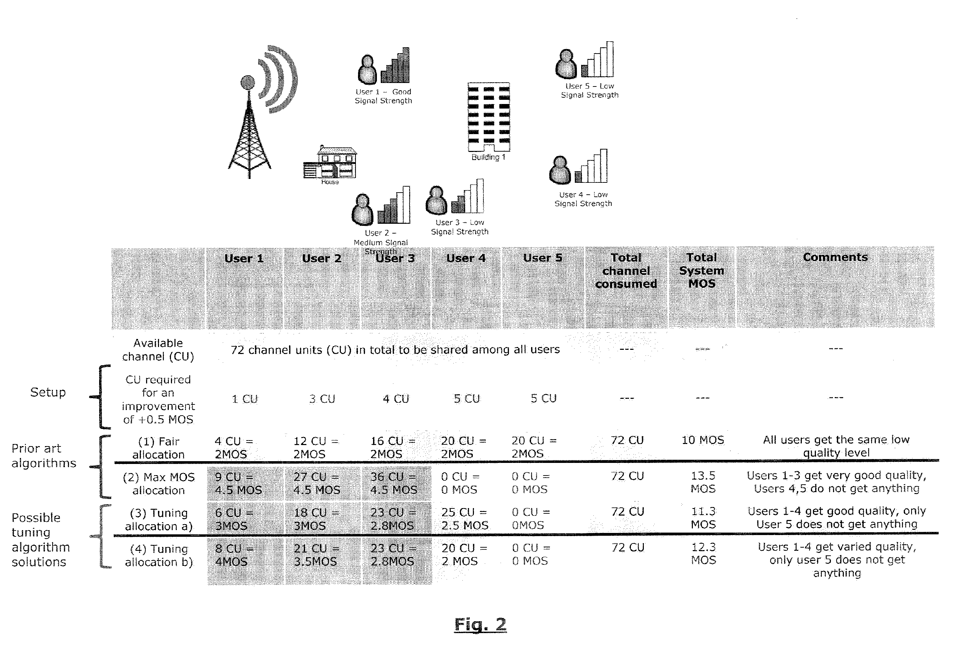

The basic scenario according to one embodiment is illustrated in Fig. 2. 5 users are server by one base station which has a maximum data rate of 72 channel units. The 5 users have different channel conditions which is reflected by the fact that for an improvement of the quality by 0,5 MOS they require different amounts of additional data rate (channel units).

The table illustrates first the different rate allocations according to the two extreme prior art approaches, maximum fairness (each user has 2 MOS, total MOS=10) and maximum efficiency (users 1 to 3 each has 4,5 MOC, total MOS=23,5). In the first approach one user receive no data and the quality for all users is low, and in the second approach only three users receive data but their quality is relatively high.

Further illustrated in Fig. 2 are two possible intermediate allocations according to embodiments of the invention. In both allocations there are 4 users which receive data, only one of them receives no data. Moreover, while the quality for users 1 to 3 still is relatively high, there is also still enough network resource to serve user 4. This illustrates that the two intermediate approaches offer a compromise which in fact is better than the two extreme prior art approaches, since for a small quality deterioration of users 1 to 3 compared to the maximum efficiency approach it is still possible to serve user 4. Moreover, users 1 to 3 still have a much better quality level than in case of the maximum fairness approach.

The proposed method in one embodiment comprises a set of tunable algorithms which allow a network operator to choose its operation point between the two extreme points presented above.

In one embodiment the solution takes as input parameters a fairness constraint set by the network operator, and provides a resource allocation solution among users which efficiently distributes the wireless channel resources to the active users, while ensuring that the fairness constraint is met. Alternatively, in another embodiment the network operator can set an efficiency target parameter, and the method provides a resource allocation solution which increases the fairness among users, while still ensuring the said efficiency target.

Furthermore, according to one embodiment in case the network operator wants to set both the fairness constraint among users and the efficiency target for the resource utilization, the method delivers a resource allocation solution which ensures the two constraints, if such a solution is feasible. Alternatively, as both constraints cannot be met at the same time, the method in one embodiment computes a feasible solution which is closest to the desired constraints, given the network operator preference towards the trade-off balance between the two constraints.

By a fairness constraint according to one embodiment there is meant the maximum application quality difference perceived by any two active users in the wireless cell, regardless of their accessed application and channel quality. By an efficiency target parameter, according to one embodiment there is meant the maximum allowed difference between the total sum of quality levels for all users achieved by the optimal allocation, and total sum of quality levels for all users achieved by the current resource allocation solution. The target may e.g. be expressed in percentage of the maximum sum of quality levels.

The proposed mechanism containing a set of tunable algorithms for the wireless resource allocation offers the network operator the flexibility of choosing the optimal operation point for its network. Knowing the applications currently accessed by the online users, the network operator can decide whether it opts for a resource allocation solution that increases the efficiency of the system, or the fairness among the active users. The method allows the choice for any feasible operation point between the two extreme points as presented above, hence it enables the tradeoff between system resource efficient use, and user fairness. Previous resource allocation mechanisms do not allow the exploration of this tradeoff; hence do not provide the same level of flexibility. For example, in a scenario where multiple users access independently multiple video streams, the network operator could opt for a resource allocation which maximizes the user perceived video quality, and hence maximizes the resource utilization efficiency. This could happen at the expense of some users with bad channel conditions which are denied network access through the allocation of no network resources towards their requested applications. On the other hand, in a video conferencing scenario, where all users are watching the same live image, the network operator could opt for an operation point which increases the fairness among users, so that all active users have a similar perception of the watched images. This could come at the expense of a generally slightly lower overall image quality.

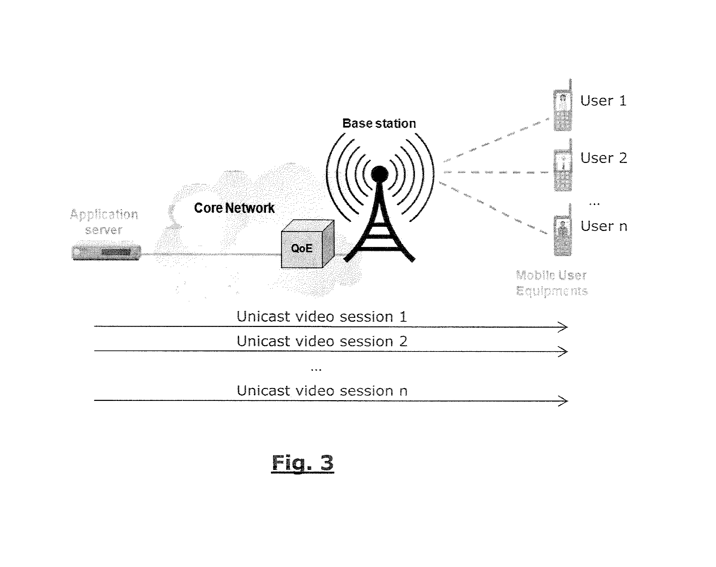

Figure 3 illustrates a the scenario to which an embodiment of the invention may be applied. The considered network architecture consists of four main network elements: Application Server (AS), QoE-based optimizer (QoE module), Base Station (BS), and the User Equipment (UE). The AS is the source of the application data stream that the user would like to access. The QoE module is acting as a downlink resource allocator that performs a network resource allocation optimization based on long-term link layer (e.g. channel condition of each UE) and the application utility information (e.g. user-perceived quality with respect to changes in application data rate). The BS is the node that schedules the packets to the UEs. The UE is the destination of the (adapted) application data stream that would be experienced by the end user.

In the following there will be illustrated how the optimizer (the QoE module) according to embodiments of the invention allocates the wireless system resources differently depending on the selected objective function (or optimization function). First of all the prior art optimization functions which form the "extreme tuning points" will be explained. Then there will be explained why a tuning algorithm is needed for the operator and then what are the meanings of fairness and system efficiency

Optimization functions: maxmin and maxsum

In literatures, two objective functions are usually used to find an optimal resource allocation: maximizing the sum of the perceived service quality (MaxSumMOS) and maximizing the average user fairness in terms of perceived service quality (MaxMinMOS). Below, there are discussed these two QoE-based objective functions in details.

*a) Sum MOS maximization (MaxSumMOS):*

The optimizer maximizes the objective function which is defined as the average utility of all users:

$$F(\bar{x}) = \sum_{i=1}^{K} MOS_i(\bar{x})$$

$$(1)$$

where $F(\bar{x})$ is the objective function '(optimization function) with the abstracted parameter tuple $\bar{x} \in \bar{x}$. $\bar{x}$ is the set of possible parameter tuples abstracted from the protocol layers representing the set of candidate operation modes (the possible different allocations/combinations of data rates to the users). The decision of optimizer can be expressed as:

$$\tilde{x}_{opt} = \underset{\tilde{x} \in \tilde{X}}{\arg\max} \; F(\tilde{x})$$

(2)

subject to:

$$\sum_{i=1}^{K} \alpha_i \leq 1 \, , \qquad \alpha_i \geq 0$$

(3)

where $\overline{x}_{opt}$ is the parameter tuple which maximizes the objective function. $\alpha_i$ is the normalized network resource share of user $i$. It should be noted that the optimization is done under system resource constraint, e.g. the total available symbol rate for all users is constrained to be less than or equal to the total symbol rate of the system. After selection of the optimal values of the parameters, those parameters are sent back to the individual layers, which are responsible for translating them back into the actual layer-specific modes of operation.

*b) Max-Min Fairness (MaxMinMOS):*

With the max-min fairness concept as described e.g. in B. Radunovic and J.-Y. Le Boudec, "A unified framework for maxmin and min-max fairness with applications, " IEEE/ACM Trans. on Networking, vol. 15, no. 5, pp. 1073-1083, Oct. 2007, the optimizer allocates the network resources such that all users experience the maximally possible same level of quality. The max-min objective function is defined as:

$$\tilde{x}_{opt} = \underset{\tilde{x} \in \tilde{X}}{\arg\max} \, \underset{i \in K}{\min} \; MOS_i(\tilde{x})$$

(4)

subject to

$$\sum_{i=1}^{K} \alpha_i \leq 1 \, , \qquad \alpha_i \geq 0$$

(5)

As explained already earlier, one can see that by using the MaxSumMOS or the MaxMinMOS as an objective function, the optimizer will allocate the network resource in order to achieve maximum system efficiency or to achieve maximum user fairness respectively. With the maximum system efficiency, the average of user perceived quality will be kept always at maximum. In other words, the optimizer will give the network resource first to the UE having good channel condition or to the UE accessing a low-demand application while giving high user perceived quality. As a consequence, the user having a bad channel condition or accessing a high-demand application will get less network resources or in the worst case no resources allocated at all. From the user fairness's view, this may be too unfair. Contrarily, with the maximum user fairness, all users will perceive the same quality regardless of channel condition and the demanding of application. From the operator's view, the usage of network resources is very inefficient.

In summary, results of both objectives are considered as an extreme case for system efficiency when applying MaxSumMOS, or as an extreme case for user fairness when applying MaxMinMOS. Nevertheless, there may be a case, in which the network operator wants to have flexibility to allocate the network resource by setting a requirement for both system efficiency and user fairness. For instance, the network operator may want to set an average of user perceived quality at 3.5 MOS level and set a difference. With the existing objective functions, it is not possible for the operator to adjust its operation point in the resource allocation problem.

There is therefore proposed a tuning algorithm allowing the network operator to adjust its operation point dynamically based on the requirements of system efficiency and user fairness set prior to the optimization.

In order to allow the network operator to adjust its operation point, according to one embodiment there are defined two metrics as follows:

- Unfairness (F): $F$ is a measure of unfairness of the system that uses the difference of MOS (or largest MOS deviation among all users) between the user experiencing the best service quality ($MOS_{max}$) and the user experiencing the lowest service quality ($MOS_{min}$). As shown in (6), in one embodiment it takes the reference of MaxMin point and MaxSum point as its maximum fairness point and its minimum fairness point respectively.

$$F = \left(MOS_{max} - MOS_{min}\right)_{maxsum} - \left(MOS_{max} - MOS_{min}\right)_{maxmin} \qquad (6)$$

Theoretically, if all users access to the same application and having the same channel condition, then the minimum $F$ should be zero. This means all users are experiencing exactly the same level of service quality, which is the most fair operating point from the user's view. By applying the MaxSumMOS objective function, it could happen that some users may experience with a highest service quality (~4.5 MOS), and some may not get any resource, hence receiving the lowest service quality (~1 MOS). The maximum F would be 3.5. Therefore, in this case, F would range between 0 and 3.5. Alternatively, the measure of unfairness ($F$) can also be the sum of quality differences between the user with the best quality ($MOS_{max}$) and all other active users as shown in (7).

$$F = \sum_{i=1}^{K} \left[\left(MOS_{max} - MOS_i\right)\right]_{maxsum} - \sum_{i=2}^{K} \left[\left(MOS_{max} - MOS_i\right)\right]_{maxmin} \qquad (7)$$

- System efficiency (ρ): ρ uses the sum of perceived quality (MOS) or the average quality of all users as a measure of system efficiency. Its range in one embodiment is calculated by (8) shown below:

$$\rho = \left(\sum_{i=1}^{K} MOS_i\right)_{maxsum} - \left(\sum_{i=1}^{K} MOS_i\right)_{maxmin} \qquad (8)$$

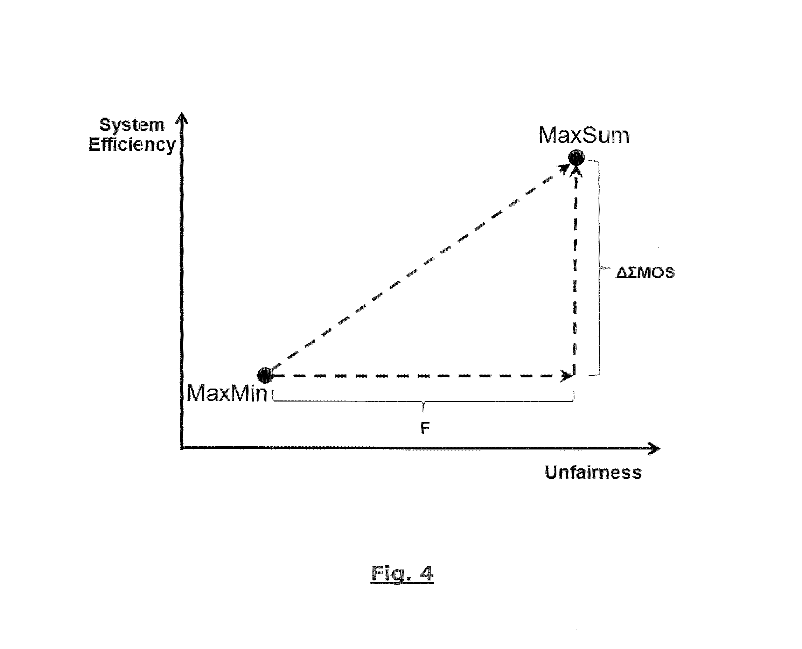

Figure 4 illustrates how the system efficiency metric and the user unfairness metric are calculated based on the MaxSum and MaxMin operating points. The MaxMin operating point corresponds to an allocation which has minimum unfairness (or maximum fairness), and the MaxSum operating point corresponds to the allocation for which the efficiency is the maximum.

Based on the two requirements (system efficiency and user fairness), the network operator according to one embodiment has three options to set its network resource policy: setting only a fairness constraint, setting only a system efficiency constraint, and setting both system efficiency and user fairness. Each option will be discussed in detail below.

**K fairness constraint**

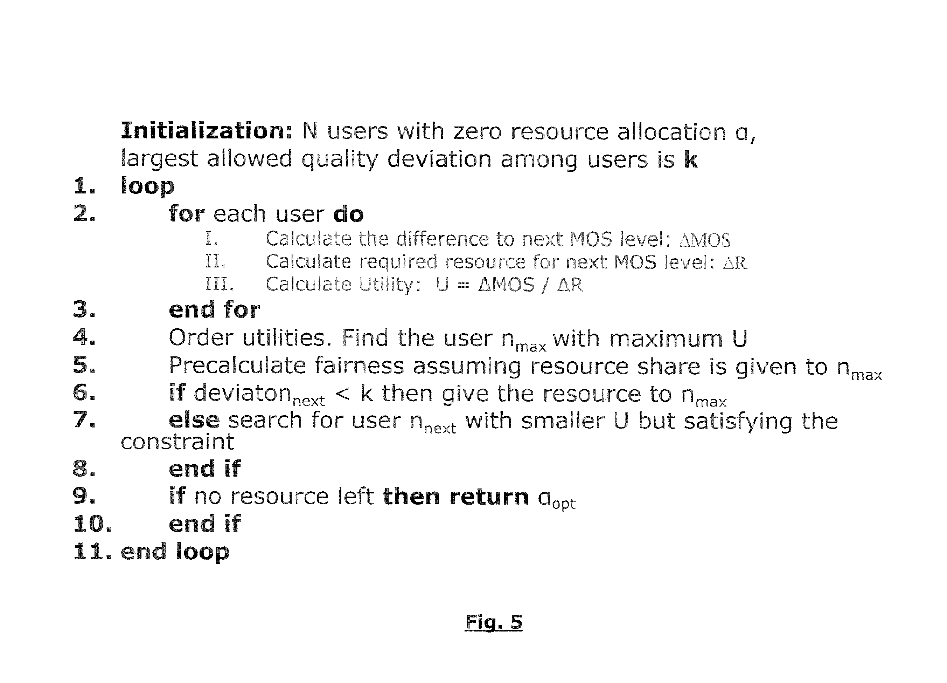

In this case, the network operator sets the largest MOS deviation (k) or the user fairness constraint. The optimal operating point would be the point, where the sum of MOS of all users is maximized while keeping the largest MOS deviation according to the selected operating point below or equal to the k. In order to find the optimal operating point with the k-fairness constraint, there may e.g. be used the k-fairness constraint greedy algorithm as shown in Fig. 5.

The algorithm starts with a zero data rate allocation to all users. The total assignable data rate is divided into individual units DeltaR, and these units are then assigned to the users one after another as follows. First for or each user the difference to the next MOS level, the necessary resource, and the corresponding change in utility is calculated. Then the user with the maximum utility U is looked for. It is then (pre-) calculated how the fairness would change if this user would be given the resource. If the change is smaller than the fairness constraint, then this user will be given the resource share.

The resources in this algorithm therefore are assigned step by step (e.g. in individual units of data rate), and for each assigning step it is checked which user should be assigned the next data rate unit. In this manner there will be step by step assigned a resource share to the user for which the increase in efficiency is maximum while still meeting the fairness criterion. This process is continued until no resources (data rate units) are left which could be assigned.

The result is a maximum MOS while still ensuring the fairness constraint imposed by the system.

**η-system efficiency constraint**

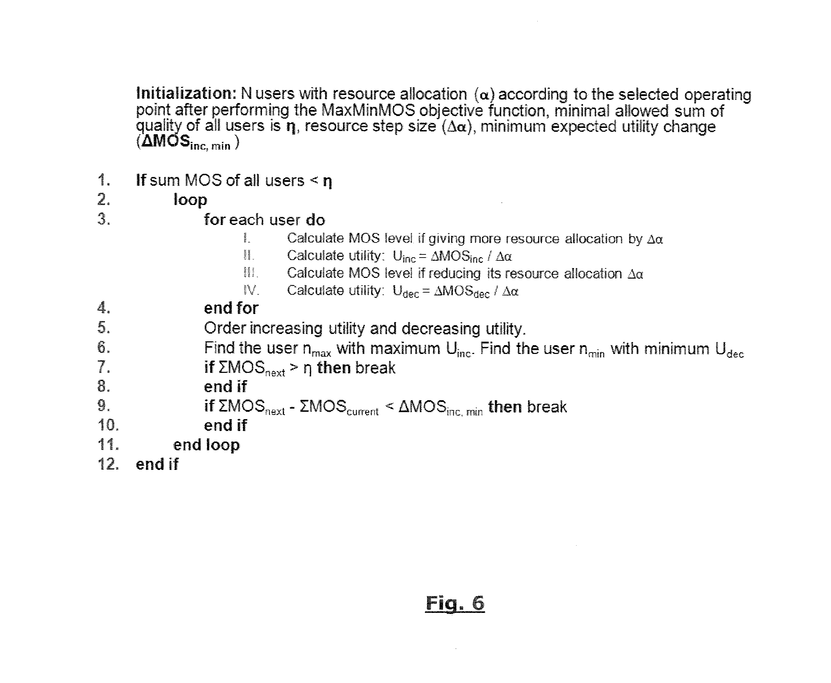

When the network operator sets a policy of network resource allocation with a system efficiency constraint η, the average/sum of service quality perceived by all users of the selected operating point after optimization must be above η. There are various algorithms that could be applied to the optimization problem in order to achieve the optimal operating point with the system efficiency constraint. According to one embodiment there is proposed the inverse greedy algorithm as shown in Figure 6. The algorithm starts with the allocation MaxMinMos which means with a state which gives maximum fairness (which per se is unlikely to be optimum in terms of efficiency). Then the algorithm starts to modify this allocation incrementally as shown in the algorithm by steps I to IV by increasing and decreasing the allocation for each user incrementally. Then an ordering is carried out according to increasing and decreasing utility. The user with maximum increase in utility and the user with minimum decrease in utility are then searched. This gives the modified allocation which achieves the maximum increase in the total MOS. If this modification already fulfils the η criterion, then the algorithm may stop, otherwise it may continue to modify the allocations. If the modification does not lead to a minimum increase, then the modification may be stopped and the present allocation is chosen.

The algorithm in Fig. 6 therefore starts with the maximum fairness allocation, and it increases incrementally the efficiency by modifying the allocations, where the increase is performed up until the η efficiency criterion is met. In this way there can be achieved a compromise between fairness and efficiency, while the efficiency criterion ensures a minimum efficiency and the start of the algorithm at the operating point of maximum fairness ensures the best possible fairness which can be achieved while meeting the efficiency criterion.

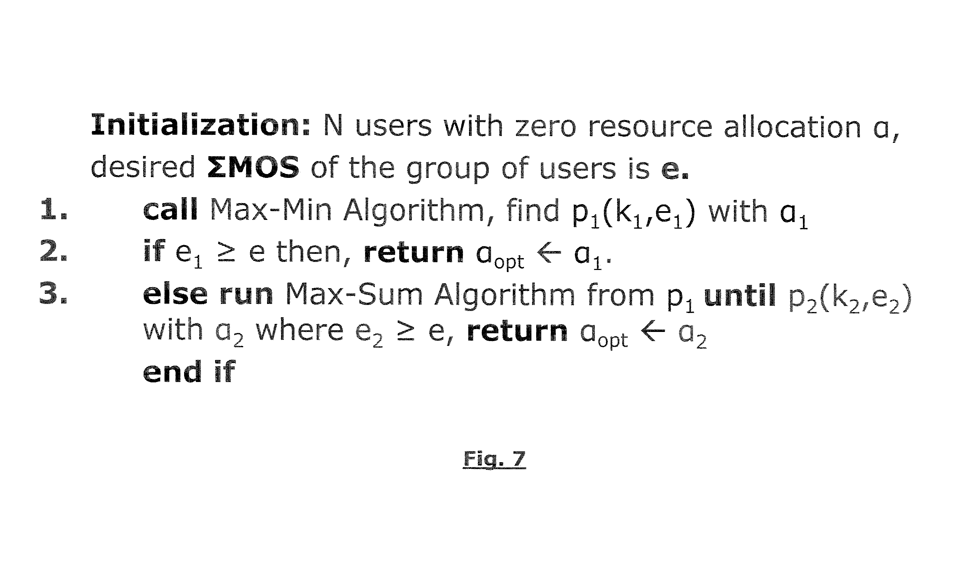

Another (simpler) algorithm is shown in Fig. 7. In Fig. 7 the efficiency parameter (the minimum sum of the MOS of the group of users) is e, and in a first step there is searched for the allocation which has maximum fairness by applying the Min-Max algorithm to find an operating point p1(k1,e1) which has the efficiency e1 and the fairness k1. If this already gives an allocation with the efficiency e1 larger than the desired efficiency parameter e, then the allocation can be chosen. Otherwise the Max-Sum algorithm is run to look for allocations with higher MOS sum. An allocation for which this criterion is then fulfilled can then be returned.

**k-fairness and η-system efficiency constraint**

Setting both k-fairness and η-system efficiency constraint is more complicated than the previous cases, since it could happen that the system cannot meet both constraints at the same time, as depicted in Figure 7.5. In this example, the operator sets k-constraint with 1.5 and η-system efficiency with 135 of sum of MOS of all users. The curve shows the result after applying the k-constraint greedy algorithm as explained before. The points on the curve are just sample points with fixing a certain k value as a constraint for fairness. Obviously, the system will never find an operating point that fulfils both constraints of k (fairness) and η (efficiency) set by the operator.

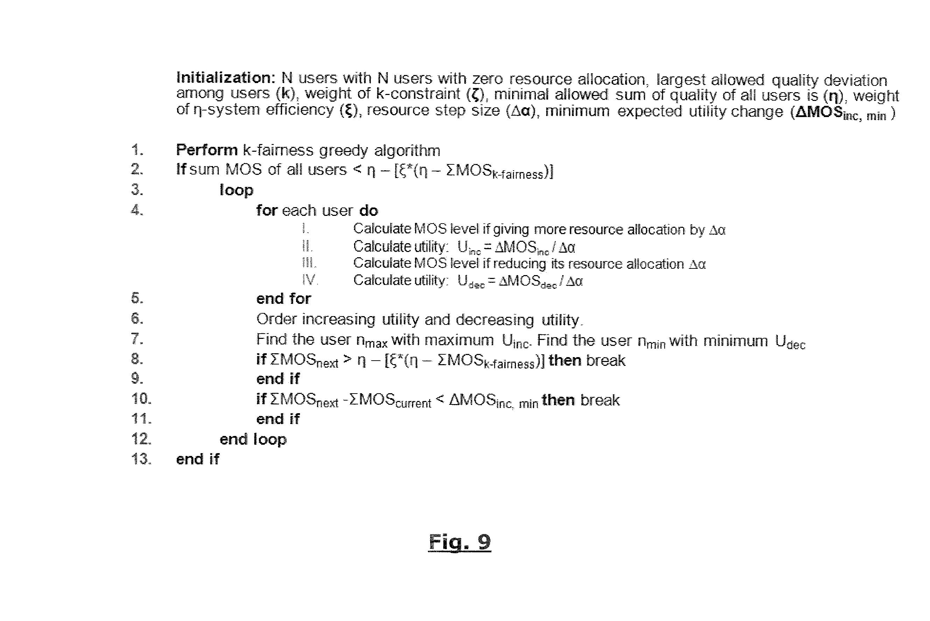

To solve this problem, according to one embodiment one may introduce an additional flexibility to the operator. The operator may give a weight of priority to the k-fairness constraint and to the η-system efficiency, in case the optimizer can't find an operating point fulfilling both constraints. For instance, the operator may set the optimal operating point at 70% close to the k-fairness constraint and 30% close to the η-system efficiency constraint, i.e. a parameter reflecting the importance of fairness its set to 0,7 and a parameter reflecting the importance of efficiency is set to 0,3. In this manner some flexibility to the fairness and the efficiency constraints is introduced to relax these constraints and based thereon the optimization may then be performed. The importance parameters for efficiency and for fairness may e.g. be chosen to be smaller than 1 and such that their sum equals 1. Figure 9 depicts an algorithm to be used in order to find an optimal operating point with the constraints of both k-fairness and η-system efficiency. The algorithm performs similar to the algorithm introduced in Fig. 5 and explained above. If the k-fairness constraint is met before the η-system efficiency constraint, it means that a solution satisfying both constraints is unfeasible. In such case, the algorithm will relax both constraints iteratively, proportionally to their respective weights. The weights are set according to the operator's preferred policy, with the only constraint that their sum should equal 1 (or 100%). The algorithm already incorporates this constraint in the procedure, using just one weight (the weight of the η-system efficiency constraint), and expressing the other weight (the weight of the k-system fairness constraint) as a function of the previous weight (1-weight of η-system efficiency constraint). The relaxation procedure is repeated until a feasible solution is found, which meets both relaxed constraints, according to the set weights.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smart phone, a PDA, or anything alike.

**Claims**

1. A method for allocating network rates to a plurality of mobile terminals through which users access different applications through a network having a certain limited total bandwidth to allocate, said method comprising:

   using as an input to an optimizing operation a quality utility function which indicates for a certain application the quality perceived by a user depending on the allocated data rate, wherein
   said optimizing operation calculates a combined quality measure based on the quality utility functions for the different applications and for different possible resource allocations in such a way that said quality measure is optimized, to thereby obtain an overall optimized resource allocation for the network, wherein said method comprises:

      providing a tuning mechanism which enables an operator of said network to define said quality measure to be optimized such that there is achieved a compromise between a maximum network efficiency and maximum fairness, wherein
      maximum efficiency means that network resources are preferably allocated to those applications which benefit most in terms of quality from the resource allocation, and wherein maximum fairness means to bring the quality levels experienced by the different users to similar values which corresponds to minimizing a quality difference perceived between the users of the different applications.

2. The method of claim 1, wherein said tuning mechanism comprises:

   setting a fairness constraint which corresponds to a maximum allowed quality difference parameter representing the quality difference between different applications and which is to be fulfilled when performing a resource allocation.

3. The method of claim 1 or 2, wherein said tuning mechanism comprises:

   setting an efficiency target parameter which corresponds to a minimum value of the of the overall quality measure of the actual chosen resource allocation and which is to be fulfilled when performing a resource allocation.

4. The method of one of claims 1 to 3, wherein
   wherein the actual resource allocation is chosen such that the overall quality measure is optimized while meeting said fairness constraint, and/or
   wherein the actual resource allocation is chosen such that the fairness is maximized while meeting said efficiency target parameter.

5. The method of one of claims 1 to 4, wherein
   if a resource allocation cannot be found which at the same time meets said fairness constraint parameter and said efficiency target parameter, searching for a resource allocation which comes closest to matching these two parameters.

6. The method of one of claims 1 to 5, further comprising:

   if a resource allocation cannot be found which at the same time meets said fairness constraint parameter and said efficiency target parameter, defining a weight for each of said fairness constraint parameter and said efficiency target parameter, said weights being used when searching for a resource allocation which comes closest to matching these two parameters.

**7.** The method of one of claims 1 to 6, further comprising:

if a resource allocation cannot be found which at the same time meets said fairness constraint parameter and said efficiency target parameter, defining an efficiency relaxation parameter which indicates the extent to which the efficiency constraint set by the efficiency parameter may be relaxed when looking for a resource allocation, and

defining a fairness relaxation parameter which indicates the extent to which the fairness constraint set by the fairness parameter may be relaxed when looking for a resource allocation; and

searching for a resource allocation which meets a relaxed fairness constraint and a relaxed efficiency constraint as defined by said relaxation parameters in connection with said fairness and said efficiency parameters.

**8.** An apparatus for allocating network rates to a plurality of mobile terminals through which users access different applications through a network having a certain limited total bandwidth to allocate, said apparatus comprising:

A module for using as an input to an optimizing operation a quality utility function which indicates for a certain application the quality perceived by a user depending on the allocated data rate, wherein

said module is adapted to perform said optimizing operation to calculate a combined quality measure based on the quality utility functions for the different applications and for different possible resource allocations in such a way that said quality measure is optimized, to thereby obtain an overall optimized resource allocation for the network, wherein said apparatus comprises:

a module for providing a tuning mechanism which enables an operator of said network to define said quality measure to be optimized such that there is achieved a compromise between a maximum network efficiency and maximum fairness, wherein

maximum efficiency means that network resources are preferably allocated to those applications which benefit most in terms of quality from the resource allocation, and wherein maximum fairness means to bring the quality levels experienced by the different users to similar values which corresponds to minimizing a quality difference perceived between the users of the different applications.

**9.** The apparatus of claim 8, wherein said tuning mechanism comprises:

setting a fairness constraint which corresponds to a maximum allowed quality difference parameter representing the quality difference between different applications and which is to be fulfilled when performing a resource allocation.

**10.** The apparatus of claim 8 or 9, wherein said tuning comprises:

setting an efficiency target parameter which corresponds to a minimum value of the of the overall quality measure of the actual chosen resource allocation and which is to be fulfilled when performing a resource allocation.

**11.** The apparatus of one of claims 9 or 10, wherein

wherein the actual resource allocation is chosen such that the overall quality measure is optimized while meeting said fairness constraint, and/or

wherein the actual resource allocation is chosen such that the fairness is maximized while meeting said efficiency target parameter.

**12.** The apparatus of one of claims 8 to 11, wherein

if a resource allocation cannot be found which at the same time meets said fairness constraint parameter and said efficiency target parameter, searching for a resource allocation which comes closest to matching these two parameters.

**13.** The apparatus of one of claims 8 to 12, further comprising:

if a resource allocation cannot be found which at the same time meets said fairness constraint parameter and said efficiency target parameter, defining a weight for each of said fairness constraint parameter and said efficiency target parameter, said weights being used when searching for a resource allocation which comes closest to matching these two parameters.

**14.** The apparatus of one of claims 8 to 13, further comprising:

if a resource allocation cannot be found which at the same time meets said fairness constraint parameter and said efficiency target parameter, defining an efficiency relaxation parameter which indicates the extent to which the efficiency constraint set by the efficiency parameter may be relaxed when looking for a resource allocation, and
defining a fairness relaxation parameter which indicates the extent to which the fairness constraint set by the fairness parameter may be relaxed when looking for a resource allocation; and
searching for a resource allocation which meets a relaxed fairness constraint and a relaxed efficiency constraint as defined by said relaxation parameters in connection with said fairness and said efficiency parameters.

**15.** A computer program comprising computer program code which when being executed on a computer enables said computer to carry out a method according to one of claims 1 to 7.

Fig. 1

|  | User 1 | User 2 | User 3 | User 4 | User 5 | Total channel consumed | Total System MOS | Comments |
|---|---|---|---|---|---|---|---|---|
| Available channel (CU) | 72 channel units (CU) in total to be shared among all users | | | | | --- | --- | --- |
| CU required for an improvement of +0.5 MOS | 1 CU | 3 CU | 4 CU | 5 CU | 5 CU | --- | --- | --- |
| (1) Fair allocation | 4 CU = 2MOS | 12 CU = 2MOS | 16 CU = 2MOS | 20 CU = 2MOS | 20 CU = 2MOS | 72 CU | 10 MOS | All users get the same low quality level |
| (2) Max MOS allocation | 9 CU = 4.5 MOS | 27 CU = 4.5 MOS | 36 CU = 4.5 MOS | 0 CU = 0 MOS | 0 CU = 0 MOS | 72 CU | 13.5 MOS | Users 1-3 get very good quality, Users 4,5 do not get anything |
| (3) Tuning allocation a) | 6 CU = 3MOS | 18 CU = 3MOS | 23 CU = 2.8MOS | 25 CU = 2.5 MOS | 0 CU = 0MOS | 72 CU | 11.3 MOS | Users 1-4 get good quality, only User 5 does not get anything |
| (4) Tuning allocation b) | 8 CU = 4MOS | 21 CU = 3.5MOS | 23 CU = 2.8MOS | 20 CU = 2 MOS | 0 CU = 0 MOS | 72 CU | 12.3 MOS | Users 1-4 get varied quality, only user 5 does not get anything |

Setup

Prior art algorithms

Possible tuning algorithm solutions

**Fig. 2**

Fig. 3

**Fig. 4**

**Initialization:** N users with zero resource allocation $a$, largest allowed quality deviation among users is **k**

1. **loop**
2.     **for** each user **do**
   - I.    Calculate the difference to next MOS level: $\Delta MOS$
   - II.    Calculate required resource for next MOS level: $\Delta R$
   - III.    Calculate Utility: $U = \Delta MOS / \Delta R$
3.     **end for**
4.     Order utilities. Find the user $n_{max}$ with maximum U
5.     Precalculate fairness assuming resource share is given to $n_{max}$
6.     **if** deviaton$_{next}$ < k then give the resource to $n_{max}$
7.     **else** search for user $n_{next}$ with smaller U but satisfying the constraint
8.     **end if**
9.     **if** no resource left **then return** $a_{opt}$
10.     **end if**
11. **end loop**

**Fig. 5**

**Initialization:** N users with resource allocation ($\alpha$) according to the selected operating point after performing the MaxMinMOS objective function, minimal allowed sum of quality of all users is $\eta$, resource step size ($\Delta\alpha$), minimum expected utility change ($\Delta MOS_{inc,\,min}$)

1.   **If** sum MOS of all users $< \eta$
2.          **loop**
3.                  **for** each user **do**
                          I.        Calculate MOS level if giving more resource allocation by $\Delta\alpha$
                          II.       Calculate utility: $U_{inc} = \Delta MOS_{inc} / \Delta\alpha$
                          III.      Calculate MOS level if reducing its resource allocation $\Delta\alpha$
                          IV.       Calculate utility: $U_{dec} = \Delta MOS_{dec} / \Delta\alpha$
4.                  **end for**
5.                  Order increasing utility and decreasing utility.
6.                  Find the user $n_{max}$ with maximum $U_{inc}$. Find the user $n_{min}$ with minimum $U_{dec}$
7.                  **if** $\Sigma MOS_{next} > \eta$ **then** break
8.                  **end if**
9.                  **if** $\Sigma MOS_{next} - \Sigma MOS_{current} < \Delta MOS_{inc,\,min}$ **then** break
10.                **end if**
11.         **end loop**
12.  **end if**


## Fig. 6

EP 2 429 237 A1

**Initialization:** N users with zero resource allocation $a$, desired **ΣMOS** of the group of users is **e.**

1. **call** Max-Min Algorithm, find $p_1(k_1,e_1)$ with $a_1$
2. **if** $e_1 \geq e$ then, **return** $a_{opt} \leftarrow a_1$.
3. **else run** Max-Sum Algorithm from $p_1$ **until** $p_2(k_2,e_2)$ with $a_2$ where $e_2 \geq e$, **return** $a_{opt} \leftarrow a_2$
   **end if**

<u>Fig. 7</u>

EP 2 429 237 A1

Fig. 8

**Initialization:** N users with N users with zero resource allocation, largest allowed quality deviation among users ($k$), weight of $k$-constraint ($\zeta$), minimal allowed sum of quality of all users is ($\eta$), weight of $\eta$-system efficiency ($\xi$), resource step size ($\Delta\alpha$), minimum expected utility change ($\Delta\text{MOS}_{inc,\ min}$)

1.     **Perform** k-fairness greedy algorithm
2.     **If** sum MOS of all users $< \eta - [\xi^*(\eta - \Sigma\text{MOS}_{k\text{-fairness}})]$
3.         **loop**
4.             **for** each user **do**
                  I.     Calculate MOS level if giving more resource allocation by $\Delta\alpha$
                  II.     Calculate utility: $U_{inc} = \Delta\text{MOS}_{inc}\ /\ \Delta\alpha$
                  III.     Calculate MOS level if reducing its resource allocation $\Delta\alpha$
                  IV.     Calculate utility: $U_{dec} = \Delta\text{MOS}_{dec}\ /\ \Delta\alpha$
5.             **end for**
6.             Order increasing utility and decreasing utility.
7.             Find the user $n_{max}$ with maximum $U_{inc}$. Find the user $n_{min}$ with minimum $U_{dec}$
8.             **if** $\Sigma\text{MOS}_{next} > \eta - [\xi^*(\eta - \Sigma\text{MOS}_{k\text{-fairness}})]$ **then** break
9.             **end if**
10.             **if** $\Sigma\text{MOS}_{next} - \Sigma\text{MOS}_{current} < \Delta\text{MOS}_{inc,\ min}$ **then** break
11.             **end if**
12.         **end loop**
13.     **end if**

<u>**Fig. 9**</u>

Europäisches
Patentamt

European
Patent Office

Office européen
des brevets

**EUROPEAN SEARCH REPORT**

Application Number

EP 10 17 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/026061 A2 (NOKIA CORP [FI]; GREEN MARILYNN [US]) 6 March 2008 (2008-03-06)<br>* paragraph [0004] *<br>* paragraph [0039] *<br>* paragraph [0042] *<br>* paragraph [0053] - paragraph [0054] *<br>----- | 1-13 | INV.<br>H04W28/22<br>H04W72/08 |
| X | SONG G ET AL: "UTILITY-BASED RESOURCE ALLOCATION AND SCHEDULING IN OFDM-BASED WIRELESS BROADBAND NETWORKS",<br>IEEE COMMUNICATIONS MAGAZINE, IEEE SERVICE CENTER, PISCATAWAY, US,<br>vol. 43, no. 12,<br>1 December 2005 (2005-12-01), pages 127-134, XP001240630,<br>ISSN: 0163-6804, DOI:<br>DOI:10.1109/MCOM.2005.1561930 | 1,8 | |
| A | * the whole document *<br>----- | 2-7,9-13 | |
| X | SALLES ET AL: "Fair and efficient dynamic bandwidth allocation for multi-application networks",<br>COMPUTER NETWORKS, ELSEVIER SCIENCE PUBLISHERS B.V., AMSTERDAM, NL,<br>vol. 49, no. 6,<br>19 December 2005 (2005-12-19), pages 856-877, XP005105129,<br>ISSN: 1389-1286, DOI:<br>DOI:10.1016/J.COMNET.2004.12.008 | 1,8 | TECHNICAL FIELDS SEARCHED (IPC)<br><br>H04W |
| A | * the whole document *<br>----- | 2-7,9-13 | |

The present search report has been drawn up for all claims

| Place of search | Date of completion of the search | Examiner |
|---|---|---|
| Berlin | 2 March 2011 | Rothlübbers, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 6080

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2011

| Patent document cited in search report | Publication date | Patent family member(s) | | Publication date |
|---|---|---|---|---|
| WO 2008026061 A2 | 06-03-2008 | EP | 2070364 A2 | 17-06-2009 |
| | | US | 2008056184 A1 | 06-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7609652 B
- EP 1798897 B1
- US 20070248178 A
- US 20080273458 A
- US 5675576 A

### Non-patent literature cited in the description

- **Z. WANG ; L. LU ; A. C. BOVIK.** Video Quality Assessment Based on Structural Distortion Measurement. *IEEE Signal Processing: Image Communication,* February 2004, vol. 19 (1), 121-132
- **S. KHAN ; S. DUHOVNIKOV ; E. STEINBACH ; W. KELLERER.** MOS-based multiuser multiapplication cross-layer optimization for mobile multimedia communication. *Advances in Multimedia,* 2007
- **L.-U. CHOI ; M. T. IVRLAC ; E. STEINBACH ; J. A. NOSSEK.** Bottom-up approach to cross-layer design for video transmission over wireless channels. *Proc. IEEE Vehicular Technology Conference 2005-Spring (VTC'S05,* 30 May 2005, vol. 5, 3019-3025
- **B. RADUNOVIC ; J.-Y. LE BOUDEC.** A unified framework for maxmin and min-max fairness with applications. *IEEE/ACM Trans. on Networking,* October 2007, vol. 15 (5), 1073-1083
- Method for subjective determination of transmission quality. *ITU-T Recommendation P.800,* August 1996
- **L..-U. CHOI ; M. T. IVRLAC ; E. STEINBACH ; J. A. NOSSEK.** Bottom-up approach to cross-layer design for video transmission over wireless channels. *Proc. IEEE Vehicular Technology Conference 2005-Spring (VTC'S05,* 30 May 2005, vol. 5, 3019-3025
- **S. THAKOLSRI ; S. KHAN ; E. STEINBACH ; W. KELLERER.** QoE-Driven Cross-Layer Optimization for High Speed Downlink Packet Access. *Journal of Communications, Special Issue on Multimedia Communications, Networking and Applications,* October 2009, vol. 4 (9), 669-680